# EUROPEAN PATENT APPLICATION

(11) **EP 2 466 426 A1**
(43) Date of publication of application: **20.06.2012**
(21) Application number: 10195403.0
(22) Date of filing: 16.12.2010
(51) Int. Cl.: G06F 3/041, G02F 1/133, H01L 27/13

(54) **Diffusion barrier structure, transparent conductive structure and method for making the same**

(71) Applicant: Innovation & Infinity Global Corp., Hsinchu City (TW)
(72) Inventor: Chu, Chao-Chieh, 300 Hsinchu City (TW)
(74) Representative: Viering, Jentschura & Partner

(57) **Abstract**

A transparent conductive structure includes a substrate unit, a first coating unit, a diffusion barrier structure, a second coating unit, a third coating unit and a conductive unit. The substrate unit includes a plastic substrate. The first coating unit includes a first coating layer formed on the plastic substrate. The diffusion barrier structure is formed on the first coating layer. The diffusion barrier structure includes a first oxide unit having a plurality of first oxide layers and a second oxide unit having a plurality of second oxide layers. The first oxide layers and the second oxide layers are stacked on top of each other alternately. The second coating unit includes a second coating layer formed on the diffusion barrier structure. The third coating unit includes a third coating layer formed on the second coating layer. The conductive unit includes a transparent conductive film formed on the third coating layer.

## Description

### BACKGROUND OF THE INVENTION

### 1. Field of the Invention

The instant disclosure relates to a diffusion barrier structure, a transparent conductive structure and a method for making the same, and more particularly, to a diffusion barrier structure, a transparent conductive structure and a method for making the same applied to a touch panel.

### 2. Description of Related Art

In 1970, touch panel is originated for military usage in United States of America. Until 1980, technologies related to touch panel were published and utilized to be other applications. Now, touch panel is universal and applied to replace input device like keyboard or mouse. Especially, most of electrical equipments such as Automatic Teller Machine (ATM), Kiosks, Point of Service (POS), household appliances, industrial electronics and so on are equipped with touch panel and its technologies to make input easily. In addition, more and more the consumer products take this trend to make them thin, light, short and small to carry, for example, personal digital assistant (PDA), mobile phone, notebook, laptop, MP3 player and so on.

Generally speaking, there are two kinds of touch panel. One is resistive touch panel, and another is capacitive touch panel. Resistive touch panel is a mainstream in the market because of low cost. Resistive touch panels have a flexible top layer and a rigid bottom layer separated by insulating dots, with the inside surface of each layer coated with a transparent metal oxide. Material of the top layer and the bottom layer is polyethylene terephthalate (PET), while material of the inside surface of each layer is indium tin oxide (ITO). The resistive panel is placed on the liquid crystal display or the graphic device and being pressed by an object like a finger to make a touch point, the coordinate of the touch point is record in the touch screen device.

On the other hand, a capacitive touch screen panel is coated with a material, typically indium tin oxide or antinomy tin oxide that conducts a continuous electrical current across the sensor. The sensor therefore exhibits a precisely controlled field of stored electrons in both the horizontal and vertical axes (it achieves capacitance). The human body is also an electrical device which has stored electrons and therefore also exhibits capacitance. When the sensor's normal capacitance field (its reference state) is altered by another capacitance field, i.e., someone's finger, electronic circuits located at each corner of the panel measure the resultant distortion in the sine wave characteristics of the reference field and send the information about the event to the controller for mathematical processing. Capacitive sensors can either be touched with a bare finger or with a conductive device being held by a bare hand. Capacitive touch screens are not affected by outside elements and have high clarity, but their complex signal processing electronics increase their cost.

The resistive touch panel is economic for end user but it has a response time lower than the capacitive touch panel which could be applied to be a special input interface, like a gesture input.

### SUMMARY OF THE INVENTION

One particular aspect of the instant disclosure is to provide a diffusion barrier structure, a transparent conductive structure and a method for making the same applied to a touch panel.

To achieve the above-mentioned advantages, one embodiment of the instant disclosure provides a diffusion barrier structure, comprising: a first oxide unit and a second oxide unit. The first oxide unit includes a plurality of first oxide layers, wherein each first oxide layer is a silicon oxide layer. The second oxide unit includes a plurality of second oxide layers, wherein each second oxide layer is an aluminum oxide layer or a lithium oxide layer, and the first oxide layers and the second oxide layers are stacked on top of each other alternately.

To achieve the above-mentioned advantages, one embodiment of the instant disclosure provides a transparent conductive structure, comprising: a substrate unit, a first coating unit, a diffusion barrier structure, a second coating unit, a third coating unit and a conductive unit. The substrate unit includes at least one plastic substrate. The first coating unit includes at least one first coating layer formed on the plastic substrate. The diffusion barrier structure is formed on the first coating layer, wherein the diffusion barrier structure comprises a first oxide unit and a second oxide unit, the first oxide unit includes a plurality of first oxide layers, the second oxide unit includes a plurality of second oxide layers, each first oxide layer is a silicon oxide layer, each second oxide layer is an aluminum oxide layer or a lithium oxide layer, and the first oxide layers and the second oxide layers are stacked on top of each other alternately. The second coating unit includes at least one second coating layer formed on the diffusion barrier structure. The third coating unit includes at least one third coating layer formed on the second coating layer. The conductive unit includes at least one transparent conductive film formed on the third coating layer.

To achieve the above-mentioned advantages, one embodiment of the instant disclosure provides a method for making a transparent conductive structure, comprising the steps of: providing a substrate unit including at least one plastic substrate; forming at least one first coating layer on the plastic substrate; forming a diffusion barrier structure on the first coating layer, wherein the diffusion barrier structure comprises a first oxide unit and a second oxide unit, the first oxide unit includes a plurality of first oxide layers, the second oxide unit includes a plurality of second oxide layers, each first oxide layer is a silicon oxide layer, each second oxide layer is an aluminum oxide layer or a lithium oxide layer, and the first oxide layers and the second oxide layers are stacked on top of each other alternately; forming at least one second coating layer on the diffusion barrier structure; forming at least one third coating layer on the second coating layer; and forming at least one transparent conductive film on the third coating layer.

In conclusion, because the first oxide layers (such as SiO₂) and the second oxide layers (such as Al(Li)Oₓ) are stacked on top of each other alternately, the diffusion barrier structure can not only avoid generating the interreaction and interdiffusion between every two layers of the transparent conductive structure, but also reduce the influence of oxygen, water vapor, other chemical substances on the transparent conductive film such as ITO conductive layer. Hence, when an ITO film is formed on the transparent conductive film by sputtering, the crystallinity of the ITO film is increased and the resistance value of the ITO film is decreased.

To further understand the techniques, means and effects the instant disclosure takes for achieving the prescribed objectives, the following detailed descriptions and appended drawings are hereby referred, such that, through which, the purposes, features and aspects of the instant disclosure can be thoroughly and concretely appreciated. However, the appended drawings are provided solely for reference and illustration, without any intention that they be used for limiting the instant disclosure.

### BRIEF DESCRIPTION OF THE DRAWINGS

FIG. 1A shows a flowchart of the method for making a transparent conductive structure according to the first embodiment of the instant disclosure;

FIG. 1B shows a lateral, schematic view of the transparent conductive structure according to the first embodiment of the instant disclosure;

FIG. 1C shows a lateral, schematic view of the diffusion barrier structure of the transparent conductive structure according to the first embodiment of the instant disclosure; and

FIG. 2 shows a lateral, schematic view of the transparent conductive structure according to the second embodiment of the instant disclosure.

### DETAILED DESCRIPTION OF THE PREFERRED EMBODIMENTS

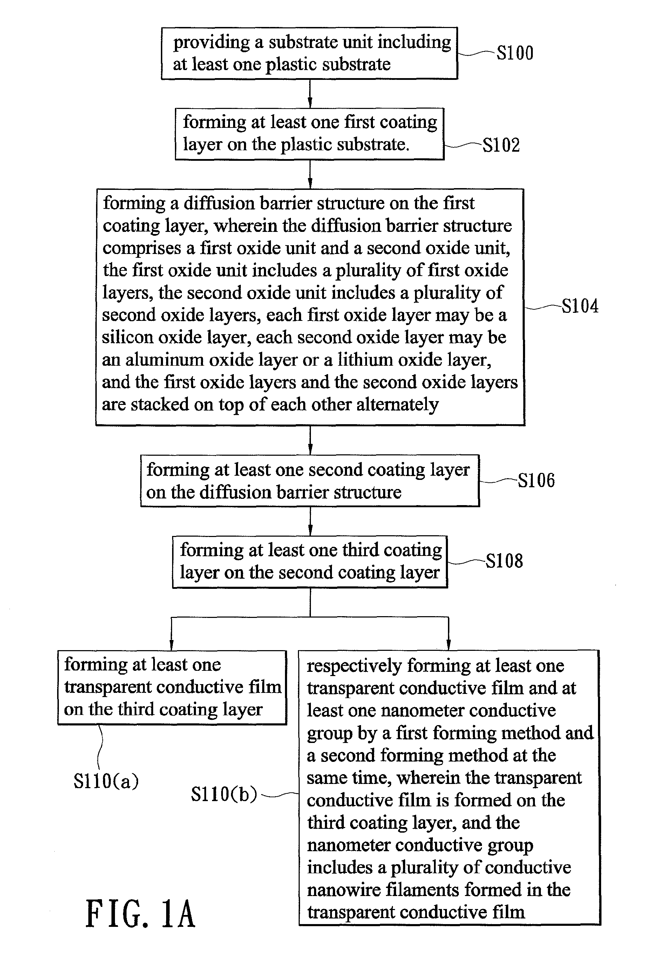

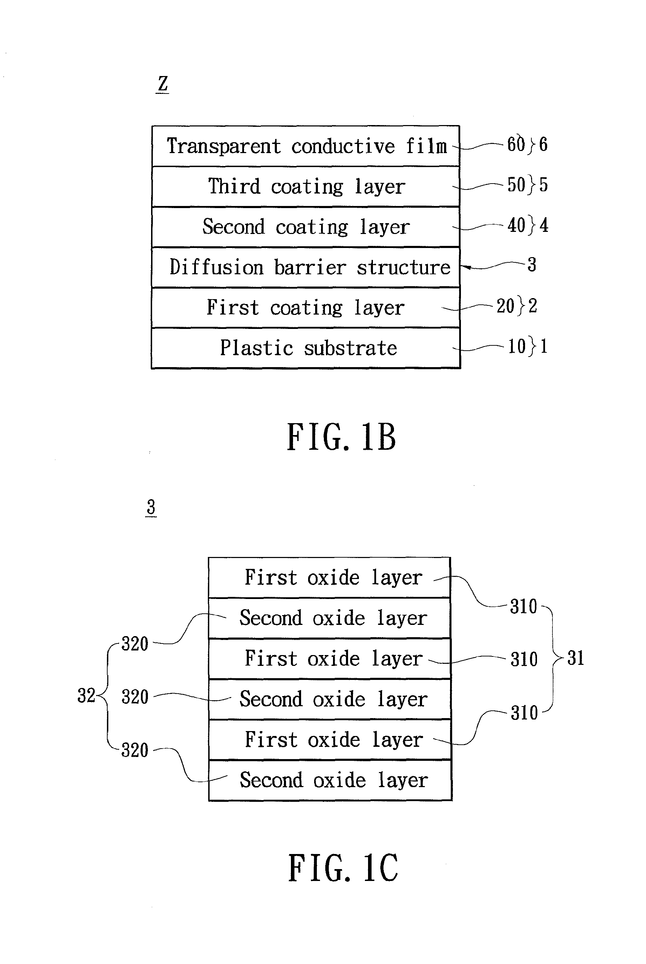

Referring to FIGS. 1A, 1B and 1C, the first embodiment of the instant disclosure a method for making a transparent conductive structure Z. The method comprises some steps from S 100 to S110(a), as follows:

The step S100 is that: first, referring to FIGS. 1A and 1B, providing a substrate unit 1 including at least one plastic substrate 10. For example, the plastic substrate 10 may be made of PET (polyethylene Terephthalate), PC (Poly Carbonate), PE (polyethylene), PVC (Poly Vinyl Chloride), PP (Poly Propylene), PS (Poly Styrene) or PMMA (Polymethylmethacrylate) according to different requirements.

The step S102 is that: referring to FIGS. 1A and 1B, forming at least one first coating layer 20 on the plastic substrate 10. For example, the first coating layer 20 may be a ultraviolet (UV) curing layer, and the first coating layer 20 has a thickness of between about 6 µm and 10 µm according to different requirements.

The step S104 is that: referring to FIGS. 1A, 1B and 1C, forming a diffusion barrier structure 3 on the first coating layer 20, wherein the diffusion barrier structure 3 comprises a first oxide unit 31 and a second oxide unit 32, the first oxide unit 31 includes a plurality of first oxide layers 310, the second oxide unit 32 includes a plurality of second oxide layers 320, each first oxide layer 310 may be a silicon oxide layer, each second oxide layer 320 may be an aluminum oxide (AlOₓ) layer or a lithium oxide (LiOₓ) layer, and the first oxide layers 310 and the second oxide layers 320 are stacked on top of each other alternately (as shown in FIG. 1C). For example, the diffusion barrier structure 3 can be formed by CVD (Chemical Vapor Deposition), sputter, evaporation or other forming manner. The diffusion barrier structure 3 has a thickness of between about 1 µm and 3 µm, each silicon oxide layer may be SiO₂, and each second oxide layer 320 has a thickness of between about 200Å and 300Å according to different requirements.

The step S106 is that: referring to FIGS. 1A and 1B, forming at least one second coating layer 40 on the diffusion barrier structure 3. For example, the second coating layer 40 may be TiO₂ or Nb₂O₅, and the second coating layer 40 has a thickness of between about 100Å and 300Å according to different requirements.

The step S108 is that: referring to FIGS. 1A and 1B, forming at least one third coating layer 50 on the second coating layer 40. For example, the third coating layer 50 may be SiO₂, and the third coating layer 50 has a thickness of between about 400Å and 600Å according to different requirements.

The step S110(a) is that: referring to FIGS. 1A and 1B, forming at least one transparent conductive film 60 on the third coating layer 50. For example, the transparent conductive film 60 may be ITO (Indium Tin Oxide), and the transparent conductive film 60 has a thickness of between about 150Å and 300Å according to different requirements.

Therefore, referring to FIGS. 1B and 1C, the first embodiment of the instant disclosure provides a transparent conductive structure Z, comprising: a substrate unit 1, a first coating unit 2, a diffusion barrier structure 3, a second coating unit 4, a third coating unit 5 and a conductive unit 6. The substrate unit 1 includes at least one plastic substrate 10. The first coating unit 2 includes at least one first coating layer 20 formed on the plastic substrate 10. The diffusion barrier structure 3 is formed on the first coating layer 20. The diffusion barrier structure 3 comprises a first oxide unit 31 and a second oxide unit 32, the first oxide unit 31 includes a plurality of first oxide layers 310, the second oxide unit 32 includes a plurality of second oxide layers 320, each first oxide layer 310 may be a silicon oxide layer, each second oxide layer 320 may be an aluminum oxide (AlOₓ) layer or a lithium oxide (LiOₓ) layer, and the first oxide layers 310 and the second oxide layers 320 are stacked on top of each other alternately (as shown in FIG. 1C). The second coating unit 4 includes at least one second coating layer 40 formed on the diffusion barrier structure 3. The third coating unit 5 includes at least one third coating layer 50 formed on the second coating layer 40. The conductive unit 6 includes at least one transparent conductive film 60 formed on the third coating layer 50.

For example, because the first oxide layers 310 (such as SiO₂) and the second oxide layers 320 (such as Al(Li)Oₓ) are stacked on top of each other alternately (as shown in FIG. 1C), the diffusion barrier structure 3 can not only avoid generating the interreaction and interdiffusion between every two layers of the transparent conductive structure Z, but also reduce the influence of oxygen, water vapor, other chemical substances on the transparent conductive film 60 such as ITO conductive layer. Hence, when an ITO film is formed on the transparent conductive film 60 by sputtering, the crystallinity of the ITO film is increased and the resistance value of the ITO film is decreased.

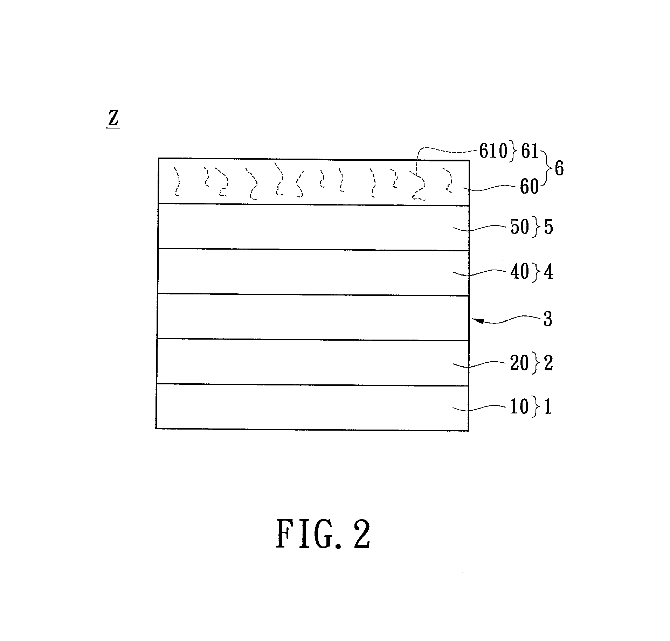

Referring to FIG. 2, the second embodiment of the instant disclosure provides a transparent conductive structure Z, comprising: a substrate unit 1, a first coating unit 2, a diffusion barrier structure 3, a second coating unit 4, a third coating unit 5 and a conductive unit 6. The difference between the second embodiment and the first embodiment is that: in the second embodiment, the conductive unit 6 includes at least one transparent conductive film 60 and at least one nanometer conductive group 61. Both the transparent conductive film 60 and the nanometer conductive group 61 are formed at the same time. The transparent conductive film 60 is formed on the third coating layer 50, and the nanometer conductive group 61 includes a plurality of conductive nanowire filaments 610 formed (such as mixed or embedded) in the transparent conductive film 60. In addition, each conductive nanowire filament 610 may be a gold nanowire filament, a silver nanowire filament, a copper nanowire filament, or any type of nanowire filament having nanometer wire diameter and conductive function etc., and the wire diameter of each conductive nanowire filament 610 may be between about 1 nm and 10 nm according to different requirements.

Moreover, the second embodiment of the instant disclosure a method for making a transparent conductive structure Z as shown in FIG. 1A. The method comprises some steps from S 100 to S110(b), where the step S110(b) is that: respectively forming at least one transparent conductive film 60 and at least one nanometer conductive group 61 by a first forming method and a second forming method at the same time (it means both the transparent conductive film 60 and the nanometer conductive group 61 are formed simultaneously), wherein the transparent conductive film 60 is formed on the third coating layer 50, and the nanometer conductive group 61 includes a plurality of conductive nanowire filaments 610 formed in the transparent conductive film 60 (as shown in FIG. 2).

Hence, in the step S110(b) of the second embodiment, the first forming method may be sputter deposition and the second forming method may be vapor deposition, thus the transparent conductive film 60 and the nanometer conductive group 61 can be respectively formed by sputtering and vaporing at the same time. In other words, when the transparent conductive film 60 is formed gradually on the third coating layer 50 by sputtering, the conductive nanowire filaments 610 are also formed gradually in the transparent conductive film 60 by vaporing at the same time. Hence, when the transparent conductive film 60 is formed to achieve a predetermined thickness by sputtering, the conductive nanowire filaments 610 are also uniformly formed inside the transparent conductive film 60. In addition, because the transparent conductive film 60 and the conductive nanowire filaments 610 are formed simultaneously, the instant disclosure can reduce a manufacturing process. Moreover, because the conductive nanowire filaments 610 are formed in the transparent conductive film 60, the thickness of the transparent conductive structure Z can be reduced. Hence, when the transparent conductive structure Z is applied to a capacitance touch panel (such as the size of panel larger than 5 inch), the reaction sensitivity of the capacitance touch panel is increased for user to control or operate the capacitance touch panel with the transparent conductive structure Z easily.

In conclusion, because the first oxide layers (such as SiO₂) and the second oxide layers (such as Al(Li)Oₓ) are stacked on top of each other alternately, the diffusion barrier structure can not only avoid generating the interreaction and interdiffusion between every two layers of the transparent conductive structure, but also reduce the influence of oxygen, water vapor, other chemical substances on the transparent conductive film such as ITO conductive layer. Hence, when an ITO film is formed on the transparent conductive film by sputtering, the crystallinity of the ITO film is increased and the resistance value of the ITO film is decreased. Moreover, the diffusion barrier structure has a good diffusion barrier effect, thus the reliability and the light transmittance of the ITO film are increased.

Furthermore, both at least one transparent conductive film and at least one nanometer conductive group can be respectively formed by two different forming methods (such as sputtering and vaporing) at the same time, and the nanometer conductive group includes a plurality of conductive nanowire filaments formed inside the transparent conductive film. In other words, because the transparent conductive film and the conductive nanowire filaments are formed simultaneously, the instant disclosure can reduce a manufacturing process. Moreover, because the conductive nanowire filaments are formed in the transparent conductive film, the thickness of the transparent conductive structure can be reduced. Hence, when the transparent conductive structure is applied to a capacitance touch panel (such as the size of panel larger than 5 inch), the reaction sensitivity of the capacitance touch panel is increased for user to control or operate the capacitance touch panel easily. Moreover, the instant disclosure has some advantages, such as good weather resistance, low resistance of 3 Ohm/square (3Ω/□), low color shift approaching zero (low b*≒0), and high transmittance (T≥90%) etc.

The above-mentioned descriptions merely represent the preferred embodiments of the instant disclosure, without any intention or ability to limit the scope of the instant disclosure which is fully described only within the following claims. Various equivalent changes, alterations or modifications based on the claims of instant disclosure are all, consequently, viewed as being embraced by the scope of the instant disclosure.

## Claims

1. A diffusion barrier structure, comprising:
a first oxide unit including a plurality of first oxide layers, wherein each first oxide layer is a silicon oxide layer; and
a second oxide unit including a plurality of second oxide layers, wherein each second oxide layer is an aluminum oxide layer or a lithium oxide layer, and the first oxide layers and the second oxide layers are stacked on top of each other alternately.

2. The diffusion barrier structure of claim 1, wherein the diffusion barrier structure has a thickness of between 1 µm and 3 µm, each silicon oxide layer is SiO₂, and each second oxide layer has a thickness of between 200Å and 300Å.

3. A transparent conductive structure, comprising:
a substrate unit including at least one plastic substrate;
a first coating unit including at least one first coating layer formed on the plastic substrate;
a diffusion barrier structure formed on the first coating layer, wherein the diffusion barrier structure comprises a first oxide unit and a second oxide unit, the first oxide unit includes a plurality of first oxide layers, the second oxide unit includes a plurality of second oxide layers, each first oxide layer is a silicon oxide layer, each second oxide layer is an aluminum oxide layer or a lithium oxide layer, and the first oxide layers and the second oxide layers are stacked on top of each other alternately;
a second coating unit including at least one second coating layer formed on the diffusion barrier structure;
a third coating unit including at least one third coating layer formed on the second coating layer; and
a conductive unit including at least one transparent conductive film formed on the third coating layer.

4. The transparent conductive structure of claim 3, wherein the plastic substrate is one of PET (polyethylene Terephthalate), PC (Poly Carbonate), PE (polyethylene), PVC (Poly Vinyl Chloride), PP (Poly Propylene), PS (Poly Styrene) and PMMA (Polymethylmethacrylate) materials.

5. The transparent conductive structure of claim 3, wherein the first coating layer is a ultraviolet curing layer, each silicon oxide layer is SiO₂, the second coating layer is TiO₂ or Nb₂O₅, the third coating layer is SiO₂, the transparent conductive film is ITO (Indium Tin Oxide), the first coating layer has a thickness of between 6 µm and 10 µm, the diffusion barrier structure has a thickness of between 1 µm and 3 µm, each second oxide layer has a thickness of between 200Å and 300Å, the second coating layer has a thickness of between 100Å and 300Å, the third coating layer has a thickness of between 400Å and 600Å, and the transparent conductive film has a thickness of between 150Å and 300Å.

6. The transparent conductive structure of claim 3, wherein the conductive unit further includes at least one nanometer conductive group, both the transparent conductive film and the nanometer conductive group are formed at the same time, wherein the transparent conductive film is formed on the third coating layer, and the nanometer conductive group includes a plurality of conductive nanowire filaments mixed or embedded in the transparent conductive film.

7. The transparent conductive structure of claim 6, wherein each conductive nanowire filament is a gold nanowire filament, a silver nanowire filament or a copper nanowire filament, each conductive nanowire filament has a wire diameter of between 1 nm and 10 nm, and the transparent conductive film and the nanometer conductive group are respectively formed by sputtering and vaporing at the same time.

8. A method for making a transparent conductive structure, comprising the steps of:
providing a substrate unit including at least one plastic substrate;
forming at least one first coating layer on the plastic substrate;
forming a diffusion barrier structure on the first coating layer, wherein the diffusion barrier structure comprises a first oxide unit and a second oxide unit, the first oxide unit includes a plurality of first oxide layers, the second oxide unit includes a plurality of second oxide layers, each first oxide layer is a silicon oxide layer, each second oxide layer is an aluminum oxide layer or a lithium oxide layer, and the first oxide layers and the second oxide layers are stacked on top of each other alternately;
forming at least one second coating layer on the diffusion barrier structure;
forming at least one third coating layer on the second coating layer; and
forming at least one transparent conductive film on the third coating layer.

9. The method of claim 8, wherein the step of forming the transparent conductive film further comprises forming at least one nanometer conductive group, thus both the transparent conductive film and the nanometer conductive group are formed at the same time, wherein the transparent conductive film is formed on the third coating layer, and the nanometer conductive group includes a plurality of conductive nanowire filaments mixed or embedded in the transparent conductive film.

10. The method of claim 9, wherein each conductive nanowire filament is a gold nanowire filament, a silver nanowire filament or a copper nanowire filament, each conductive nanowire filament has a wire diameter of between 1 nm and 10 nm, and the transparent conductive film and the nanometer conductive group are respectively formed by sputtering and vaporing at the same time.
